# EUROPÄISCHE PATENTANMELDUNG

(11) **EP 0 974 763 A1**
(43) Veröffentlichungstag der Anmeldung: **26.01.2000**
(21) Anmeldenummer: 99810574.6
(22) Anmeldetag: 02.07.1999
(51) Int. Cl.: F16C 39/06

(54) **Verfahren zur Regelung der Position eines magnetisch gelagerten Rotors und Vorrichtung mit einem magnetisch gelagerten Rotor**

(30) Priorität: 20.07.1998 EP 98810696
(71) Anmelder: Sulzer Electronics AG, 8409 Winterthur (CH); LUST ANTRIEBSTECHNIK GmbH, 35633 Lahnau-Waldgirmes (DE)
(72) Erfinder: Betschon, Felix, 9410 Heiden (CH); Schöb, Reto, Dr., 8604 Volketswil (CH)
(74) Vertreter: Sulzer Management AG

(57) **Zusammenfassung**

Bei einem Verfahren zur Regelung der Position eines magnetisch gelagerten Rotors (1) wird beim Auftreten periodischer Lageabweichungen, die beispielsweise durch Unwuchten (m) des Rotors (1) verursacht werden, ein Kompensationssignal (y(k))erzeugt, welches in seiner Amplitude und Phase näherungsweise dem Signal (s(k)) entspricht, das durch die periodischen Lageabweichungen des Rotors (1) hervorgerufen wird. Dieses Kompensationssignal (y(k)) wird der Ansteuereinheit (3) des Magnetlagers (4) des Rotors (1) subtraktiv zum Positionssignal des Rotors frequenz- und phasenrichtig zugeführt, wobei das Kompensationssignal (y(k)) ohne Kenntnis der Winkellage des Rotors (1) erzeugt wird.

## Beschreibung

Die Erfindung betrifft ein Verfahren zur Regelung der Position eines magnetisch gelagerten Rotors und eine Vorrichtung mit einem magnetisch gelagerten Rotor gemäss dem Oberbegriff des jeweiligen unabhängigen Patentanspruchs.

Magnetisch gelagerte Rotoren kommen mittlerweile in vielen Anwendungsgebieten zum Einsatz. Ein Problem kann dann auftreten, wenn die Rotoren Unwuchten (zumeist durch ungleichmässige Masseverteilungen) aufweisen. Bei exakt rotationssymmetrischen Rotoren mit gleichmässigen Masseverteilungen fällt die geometrische (Rotationssymmetrie-)Achse und die natürliche Trägheitsachse (bei der Rotation) zusammen. In diesem Fall wird keine Unwucht und keine periodische Lageabweichung des Rotors, die von einer solchen Unwucht herrührt, festzustellen sein. Der Rotor dreht sich um seine geometrische Achse.

Ist nun eine Unwucht vorhanden, so kann man sich diese vereinfacht vorstellen wie eine kleine zusätzliche Masse auf dem Rotor, die nicht auf der geometrischen Achse des Rotors angeordnet ist. Es kommt aufgrund der Unwuchtkräfte zu einer periodischen Lageabweichung (Auslenkung) des Rotors von der Sollage. Diese Auslenkungen können vom Magnetlager praktisch nicht ausgeregelt werden, da die Verstärkung des Reglers begrenzt ist, wodurch auch die Steifigkeit des Magnetlagers begrenzt ist.

Da die Unwuchtkräfte proportional zum Quadrat der Drehfrequenz des Rotors sind, ist der "zentrierende" Einfluss des Magnetlagers bei höheren Drehfrequenzen des Rotors vernachlässigbar. Der Rotor dreht sich dann mehr oder weniger um seine natürliche Trägheitsachse, die jedoch nicht mehr mit der geometrischen (Rotationssymmetrie-)Achse des Rotors zusammenfällt.

Durch Phasenverluste im Regler und im Leistungsverstärker ist es bei höheren Drehzahlen sogar möglich, dass das Magnetlager erst mit einer zeitlichen Verzögerung auf die Auslenkung "reagiert", nämlich dann, wenn die anregende "Unwuchtmasse" sich gegenüber der betreffenden Reglerachse (das ist die jeweilige Richtung, in welcher das Magnetlager regeln kann) bereits um einen erheblichen Winkel weitergedreht hat. Der Regler erzeugt dann im Magnetlager Korrekturkräfte, welche in die falsche Richtung wirken und oft die Auslenkung des Rotors sogar noch zusätzlich vergrössern. Aufgrund der Auslenkung erzeugt der Regler enorme Stellgrössen (Lagerströme), welche zwar eine hohe Verstärkerleistung erfordern, letztlich jedoch keine Zentrierung des Rotors bewirken, sondern sich oft sogar noch gegenteilig auswirken, also in höchstem Masse ineffizient sind.

In der US-A-4,626,754 wird vorgeschlagen, durch einen mit der Drehfrequenz mitgeführten Bandpass mit einer verstimmbaren Mittenfrequenz die mit der Drehfrequenz des Rotors harmonischen Anteile der Lageabweichungen des Rotors selektiv zu verstärken, um bei diesen Frequenzen selektiv die Steifigkeit des Magnetlagers zu erhöhen (damit die Auslenkungen geringer bleiben).

Es existieren auch ähnliche Vorschläge, die darauf abzielen, die mit der Drehfrequenz harmonischen Lageabweichungssignale durch eine Bandsperre zu unterdrücken, damit der Rotor um seine "natürliche" Trägheitsachse rotieren kann, ohne dass der Regler hohe Stellströme bzw. das Magentlager hohe Rückstellkräfte (zentrierende Kräfte) erzeugt, die ohnehin ineffizient wären.

Diese Art der Kompensation ist als sogenannte "feed-back"-Kompensation bekannt, da der Eingriff direkt im Regelkreis erfolgt. Nachteilig bei der "feed-back"-Kompensation ist allerdings, dass eben nicht nur bei der relevanten Filterfrequenz (Mittenfrequenz der Bandpasses bzw. der Bandsperre) selbst, sondern auch in der Umgebung der Filterfrequenz der Phasengang des Reglers massiv beeinflusst wird, was recht häufig zu Stabilitätsproblemen führt.

Alternativ zur "feed-back"-Kompensation ist die sogenannte "feed-forward"-Kompensation bekannt. Diese greift nicht direkt in den Regelkreis ein und weist daher die beschriebenen Nachteile nicht auf. Die grundsätzliche Idee der "feed-forward"-Kompensation besteht darin, zusätzlich zur Stellgrösse des Regler am Reglerausgang ein mit der Drehfrequenz des Rotors synchrones Stellsignal einzuprägen, welches im Magnetlager Kräfte erzeugt, die den Unwuchtkräften entgegengesetzt wirken.

Da diese Kräfte aber, wie bereits erwähnt, sehr gross werden können, und schnell die maximal möglichen (Rück-)Stellkräfte des Magnetlagers überschreiten, kann es auch sinnvolll sein, mit der Drehfrequenz des Rotors harmonische Frequenzen im Positionssignal des Rotors zu unterdrücken.

Dadurch wird verhindert, dass der Regler bzw. dann das Magnetlager versucht, auf die durch die Unwucht bedingten Auslenkungen zu reagieren.

Dies kann beispielsweise derart erfolgen, dass man auf den Reglereingang ein mit der Drehfrequenz des Rotors synchrones Sinussignal negativ gerade so gross einprägt, dass die drehfrequenzsynchronen Anteile im Positionssignal gerade kompensiert werden.

Bei beiden geschilderten Varianten der "feed-forward"-Kompensation ist nun das Problem, ein Verfahren bzw. eine Vorrichtung zu finden, mit welchem bzw. mit welcher die drehfrequenzsynchronen Kompensationssignale amplituden- und phasenrichtig erzeugt werden können. Es müssen für eine Kompensation nämlich sowohl die Position des Rotors (als gesamter Körper) als auch seine Winkellage (Drehwinkelstellung des Rotors) bekannt sein, um amplituden- und phasenrichtige Kompensationssignale erzeugen zu können. Dabei kommt erschwerend hinzu, dass sich die Kompensationssignale mit einer Änderung der Drehfrequenz des Rotors sowohl in der Amplitude als auch in der Phase ändern.

Ein Verfahren zur Erzeugung von drehfrequenzsynchronen Kompensationssignalen ist in der Publikation "C432/088" der Zeitschrift IMechE, 1992, beschrieben. Das dort beschriebene Verfahren ist insofern nachteilig, als zu dessen Realisierung ein mit der Drehfrequenz des Rotors synchrones und mit dem Rotordrehwinkel (Drehwinkelstellung des Rotors) phasenstarres Referenzsignal erforderlich ist.

Es ist daher eine Aufgabe der Erfindung, ein Verfahren und eine Vorrichtung vorzuschlagen, mit welcher die Kompensationssignale einfacher erzeugt werden können und welches auch einfach, insbesondere mit Hilfe digitaler Signalverarbeitung, realisierbar ist.

Diese Aufgabe wird verfahrensmässig bzw. vorrichtungsmässig durch die Merkmale des jeweiligen unabhängigen Patentanspruchs gelöst. Besonders vorteilhafte Varianten und Ausgestaltungen ergeben sich aus den Merkmalen der abhängigen Patentansprüche.

Bei dem erfindungsgemässen Verfahren zur Regelung der Position eines magnetisch gelagerten Rotors beim Auftreten periodischer Lageabweichungen, die beispielsweise durch Unwuchten des Rotors verursacht werden, wird ein Kompensationssignal erzeugt. Dieses Kompensationssignal entspricht in seiner Amplitude und Phase näherungsweise dem Signal, das durch die periodischen Lageabweichungen des Rotors hervorgerufen wird. Dieses Kompensationssignal wird der Ansteuereinheit des Magnetlagers des Rotors subtraktiv zum Positionssignal des Rotors frequenz- und phasenrichtig zugeführt, wobei das Kompensationssignal ohne Kenntnis der Winkellage des Rotors erzeugt wird. Die Winkellage (aktuelle Drehwinkelstellung) des Rotors braucht bei diesem Verfahren also nicht bekannt zu sein.

Zur Erzeugung des Kompensationssignals kann das Positionssignal des Rotors (also die Position des Rotors als gesamter Körper) einerseits und ein der Drehfrequenz des Rotors entsprechendes Referenzsignal andererseits verwendet werden. Die Winkellage (aktuelle Drehwinkelstellung) des Rotors ist - wie bereits erwähnt - nicht erforderlich.

Vorzugsweise wird zur Erzeugung des Kompensationssignals ein adaptives Filter verwendet, dessen Eingangssignale durch das Positionssignal des Rotors einerseits und durch ein der Drehfrequenz des Rotors entsprechendes Referenzsignal andererseits gebildet werden.

Als adaptives Filter wird vorzugsweise ein Filter mit einem digitalen FIR-Filter (Finite Impulse Response) verwendet, dessen Koeffizienten so adaptiert werden, dass das Ausgangssignal des FIR-Filters näherungsweise dem Signal entspricht, das durch die periodischen Lageabweichungen des Rotors hervorgerufen wird.

Das FIR-Filter kann grundsätzlich beliebig viele Koeffizienten aufweisen, vorzugsweise wird jedoch ein FIR-Filter mit zwei Koeffizienten verwendet.

Das Referenzsignal, welches der Drehfequenz des Rotors entspricht, kann mit Hilfe von Schwingungen erzeugt werden, die vom Rotor im Magnetlager verursacht werden und vom Magnetlager auf das Gehäuse übertragen werden (z.B. kann es akustisch mit Hilfe eines Mikrofons bestimmt werden).

Das Referenzsignal kann auch mit Hilfe der Motordrehzahl oder der Motorsolldrehzahl digital erzeugt werden.

Das Referenzsignal kann auch mit Hilfe der Kommutierungssignale erzeugt werden (z.B. bei bürstenlosen Gleichstrom-Motoren).

Schliesslich kann das Referenzsignal auch mit Hilfe der Motorspannung oder des Motorstroms oder mit Hilfe der Motorsollspannung oder der Motorsollstroms erzeugt werden.

Die erfindungsgemässe Vorrichtung weist einen magnetisch gelagerten Rotor auf, dessen Position mit Hilfe von Positionssensoren bestimmt wird. Sie umfasst ferner eine Ansteuereinheit zur Steuerung der Position des Rotors, sowie eine Einrichtung zur Erzeugung eines Kompensationssignals. Mit dieser Einrichtung zur Erzeugung eines Kompensationssignals wird beim Auftreten periodischer Lageabweichungen, die beispielsweise durch Unwuchten des Rotors verursacht werden, ein Kompensationssignal erzeugt. Dieses Kompensationssignal entspricht in seiner Amplitude und Phase näherungsweise dem Signal, das durch die periodischen Lageabweichungen des Rotors hervorgerufen wird und wird der Ansteuereinheit subtraktiv zu dem von den Positionssensoren kommenden Positionssignal frequenz- und phasenrichtig zugeführt. Die Einrichtung zur Erzeugung des Kompensationssignal erzeugt das Kompensationssignal ohne Kenntnis der Winkellage des Rotors, eine Kenntnis der Winkellage des Rotors ist also nicht nötig.

Die Einrichtung zur Erzeugung des Kompensationssignals weist als Einggangssignale die von den Positionssensoren kommenden Positionssignale einerseits und andererseits ein der Drehfrequenz des Rotors entsprechendes Signal auf. Die Kenntnis der Winkellager des Rotors ist - wie bereits erwähnt - nicht nötig.

Die Einrichtung zur Erzeugung des Kompensationssignals umfasst vorzugsweise ein adaptives Filter, das als Eingangssignale das Positionssignal des Rotors einerseits das der Drehfrequenz des Rotors entsprechende Referenzsignal andererseits aufweist.

Dieses adaptive Filter umfasst vorzugsweise ein digitales FIR-Filter (Finite Impulse Response), dessen Koeffizienten so adaptiert werden, dass das Ausgangssignal des FIR-Filters näherungsweise dem Signal entspricht, das durch die periodischen Lageabweichungen des Rotors hervorgerufen wird.

Grundsätzlich kann dieses FIR-Filter beliebig viele Koeffizienten aufweisen, vorzugsweise weist es jedoch zwei Koeffizienten auf..

Das Referenzsignal kann mit Hilfe von Sensoren erzeugt werden, welche die Frequenz von Schwingungen messen, die vom Rotor im Magnetlager verursacht werden und vom Magnetlager auf das Gehäuse übertragen werden.

Die Vorrichtung kann auch einen Mikorprozessor umfassen, welcher das Referenzsignal mit Hilfe der Motordrehzahl oder der Motorsolldrehzahl digital erzeugt.

Die Vorrichtung kann auch eine Einrichtung aufweisen, welche das Referenzsignal mit Hilfe von Kommutierungssignalen (z.B. bei einem bürstenlosen DC-Motor) erzeugt.

Schliesslich kann die Vorrichtung eine Einrichtung umfassen, welche das Referenzsignal mit Hilfe der Motorspannung oder des Motorstroms oder mit Hilfe der Motorsollspannung erzeugt.

Im folgenden wird die Erfindung anhand der Zeichnung näher erläutert. Es zeigen, in schematischer Darstellung:
- Fig. 1: Eine Vorrichtung mit einem magnetisch gelagerten Rotor und einer symbolisch angedeuteten Unwucht,
- Fig.2: ein Blockbild einer Vorrichtung mit einer "feed-forward"-Regelung zur Erläuterung des erfindungsgemässen Verfahrens
und
- Fig. 3: ein Ausführungsbeispiel des adaptiven Filters aus der Regelung gemäss Fig. 2.

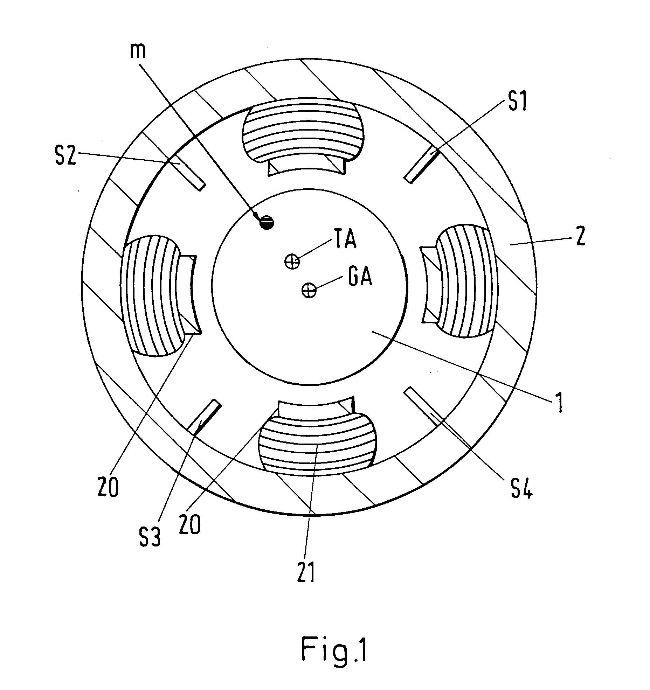

In Fig. 1 ist eine Vorrichtung mit einem magnetisch gelagerten Rotor 1 zu erkennen. Man erkennt auch den Stator 2 mit den Statorzähnen 20, um welche herum Steuerwicklungen 21 zur Steuerung der Position des Rotors 1 gewickelt sind. Mit Hilfe der Steuerwicklungen kann auch ein magnetischer Ruhefluss vorgegeben werden (Gleichanteil, Arbeitspunkt), alternativ kann ein Ruhefluss auch permanentmagnetisch erregt werden.

Der Rotor weist eine geometrische Achse GA auf, um welche herum der Rotor 1 sich dreht, wenn die Masse des Rotors 1 völlig gleichmässig verteilt ist und die geometrische Gestalt des Rotors 1 völlig rotationssymmetrisch in Bezug auf die geometrische Achse GA ist. In diesem Fall fällt die natürliche Trägheitsachse des Rotors 1 (bezüglich der Rotation) mit der geometrischen Achse GA zusammen und bei einer Rotation rotiert der Rotor um seine geometrische Achse GA.

Ist nun die Massenverteilung im Rotors 1 ungleichmässig, so kann man sich dies vereinfacht so vorstellen, als wenn eine zusätzliche kleine Masse m auf dem Rotor 1 angeordnet ist, jedoch nicht auf der geometrischen Achse GA. Bedingt durch diese Unsymmetrie oder Unwucht ergibt sich eine neue natürliche Trägheitsachse TA, welche nicht mehr mit der geometrischen Achse GA zusammenfällt. Der Rotor 1 würde sich also ohne korrigierenden Einfluss des Magnetlagers um seine neue natürliche Trägheitachse TA drehen.

Die Positionssensoren S1,S2,S3 und S4 detektieren die Lageabweichung des Rotors 1 aus seiner "zentrierten" Sollage. In der Sollage rotiert nämlich der Rotor 1 um seine geometrische Achse GA. Während einige konventionelle Magnetlager nun mittels der Steuerwicklungen 21 magnetische Steuerflüsse erzeugen, um zu versuchen, den Rotor 1 wieder in seine "zentrierte" Sollage zu bewegen, wird hier versucht, diejenigen Steuerflüsse zu vermeiden, die eine Lageabweichung des Rotors 1 korrigieren sollen, welche harmonisch mit der Drehfrequenz (Drehzahl) des Rotors 1 auftritt. Mit anderen Worten heisst dies, dass solche Lageabweichungen vom Magnetlager "ignoriert" werden sollen, die z.B. durch eine Unwucht des Rotors 1 hervorgerufen werden und die demzufolge mit der gleichen Frequenz auftreten, mit der der Rotor 1 sich dreht. Die Gründe hierfür sind in der Einleitung hinlänglich diskutiert.

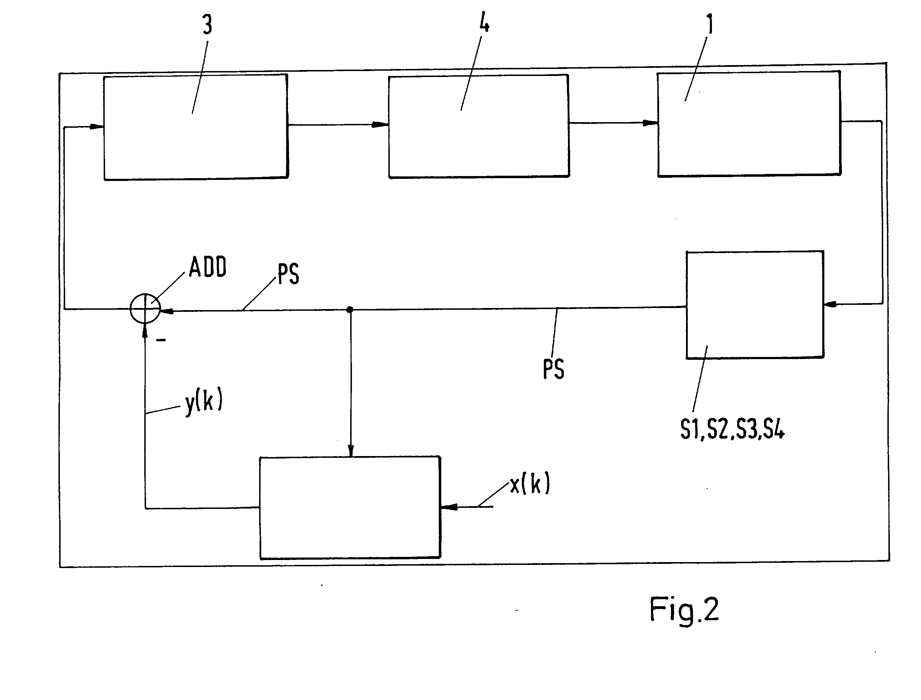

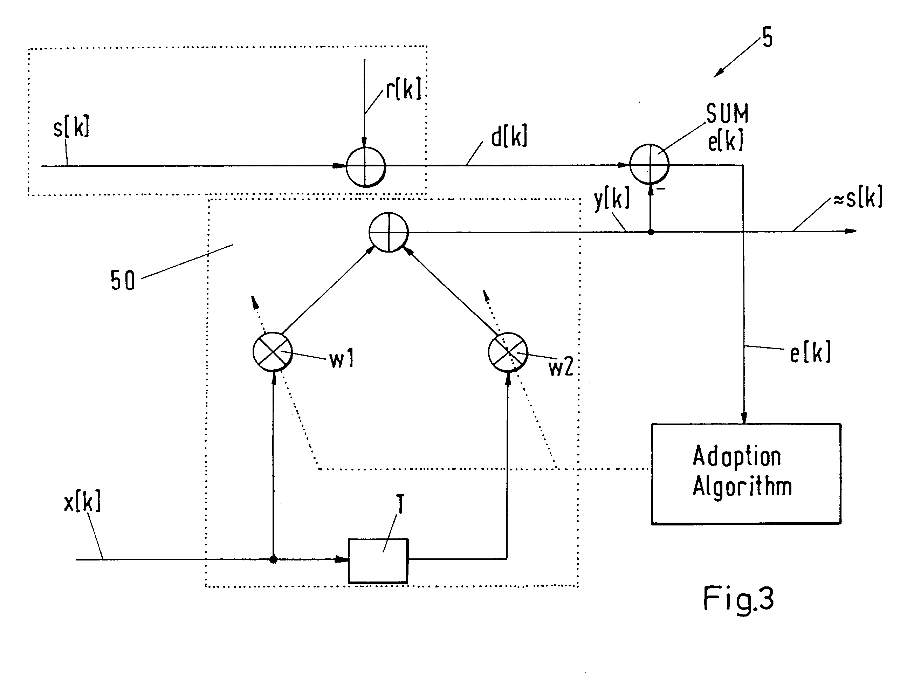

Fig. 2 zeigt ein Blockbild einer Vorrichtung mit einer "feed-forward"-Regelung, in welchem Blockbild einzelne Komponenten der Vorrichtung sowie einige darin auftretende Signale dargestellt sind. Symbolisch angedeutet sind eine Ansteuereinheit 3, die der Ansteuerung eines Magnetlagers 4 dient, der Rotor 1 und die Positionssensoren S1,S2,S3 S4. Das Positionssignal PS der Positionssensoren S1,S2,S3,S4 wird einerseits einem adaptiven Filter 5 zugeführt, andererseits einem Additionspunkt ADD. Dieses Positionssignal PS enthält nun Signalanteile s(k) (siehe Fig. 3), die von Lageabweichungen des Rotors 1 herrühren, die harmonisch mit der Drehfrequenz des Rotors 1 sind. Ausser denjenigen Lageabweichungen, die harmonisch mit der Drehfrequenz des Rotors 1 auftreten, können jedoch auch noch andere Lageabweichungen des Rotors 1 auftreten, und bezüglich solcher nicht-harmonischen Lageabweichungen soll eine Korrektur der Rotorposition durch das Magnetlager 4 erfolgen (die Schreibweise s(k) für ein Signal ist in der digitalen Signalverarbeitung üblich, weil es sich ja immer um diskrete Signalwerte handelt).

Bezüglich derjenigen Signalanteile s(k), die von Lageabweichungen des Rotors herrühren, die harmonisch mit der Drehfrequenz des Rotors 1 sind, soll ein Kompensationssignal erzeugt werden, damit solche harmonischen Lageabweichungen des Rotors 1 nicht durch das Magnetlager 4 korrigiert werden. Das adaptive Filter 5 erzeugt ein solches Kompensationssignal y(k) (siehe auch Fig. 3), welches dann praktisch näherungsweise dem Signal s(k) entsprechen soll. Das Kompensationssignal y(k) wird dem Additionspunkt ADD (Fig. 2) subtraktiv zum Positionssignal PS der Positionssensoren S1,S2,S3,S4 zugeführt. Dieses Kompensationssignal y(k) kompensiert somit diejenigen Signalanteile s(k) des Positionssignals PS, welche von Lageabweichungen des Rotors 1 herrühren, die harmonisch mit der Drehfrequenz des Rotors sind (also z.B. diejenigen Signale, die Lageabweichungen repräsentieren, die von Unwuchten des Rotors herrühren). Die Differenz aus dem Positionssignal PS der Positionssensoren S1,S2,S3,S4 und dem Kompensationssignal y(k) bildet dann das Eingangssignal für die Ansteuereinheit 3, die entsprechend diesem Eingangssignal dann die Steuerwicklungen 21 (Fig. 1 ) ansteuert.

Während es zur Erzeugung eines solchen Kompensationssignals gemäss dem Stand der Technik erforderlich war, nicht nur die Drehfrequenz des Rotors 1, sondern auch noch dessen jeweiligen Drehwinkel zu kennen, um ein Kompensationssignal zu erzeugen, welches dann amplituden- und phasenrichtig (drehwinkelrichtig) eingeprägt wird, ist es erfindungsgemäss nun nicht mehr nötig, den jeweiligen Rotordrehwinkel zu kennen. Das Referenzsignal x(k) (siehe auch Fig. 3), welches dem adaptiven Filter 5 (Fig.2) zugeführt wird, ist nur noch charakteristich für die Drehfrequenz (Drehzahl) des Rotors 1, nicht jedoch für dessen Drehwinkel.

Dies lässt sich beispielsweise erreichen mit einem adaptiven Filter 5, wie es in dem Ausführungsbeispiel gemäss Fig. 3 gezeigt ist. Das adaptive Filter 5 weist als Eingangssignale sowohl das Signal s(k) auf, welches zuvor aus dem Positionssignal PS (Fig. 2) gewonnen wird, und welches nur noch Anteile enthält, die harmonisch mit der Drehfrequenz des Rotors 1 sind. Symbolisch ist in Fig. 3 noch angedeutet, dass diesem Signal s(k) ein Rauschsignal r(k) (z.B. weisses Gauss'sches Rauschen) überlagert sein kann. Die Summe aus dem Signal s(k) und r(k) ergibt ein Signal d(k), welches einem Summationspunkt SUM zugeführt wird. Diesem Signal s(k) wird am Additionspunkt SUM das Kompensationssignal y(k) subtraktiv zugeführt, welches näherungsweise dem Signal s(k) entspricht.

Das adaptive Filter 5 aus Fig. 3 umfasst ein digitales FIR-Filter 50 (Finite Impulse Response) mit zwei Koeffizienten w1 und w2, mit dessen Hilfe das Kompensationssignal y(k) erzeugt wird. Dem FIR-Filter 50 wird das Referenzsignal x(k) zugeführt, welches charakteristisch für die Drehfrequenz (Drehzahl) des Rotors ist, jedoch nicht für dessen aktuellen Rotordrehwinkel. Im FIR-Filter ist ein Verzögerungsglied T vorgesehen, welches das Referenzsignal x(k) zur Ermittlung des Koeffizienten w2 verzögert, beispielsweise um etwa ein Viertel der Periodendauer des sich drehenden Rotors. Das Referenzsignal x(k) wird mit dem Koeffizienten w1 multipliziert, während das mittels des Verzögerungsglieds T verzögerte Referenzsignal mit dem Koeffzienten w2 multipliziert wird. Diese mit den jeweiligen Koeffizienten multiplizierten Signale werden addiert und bilden dann das Kompensationssignal y(k). Die Koeffizienten w1 und w2 werden laufend mit Hilfe eines Adaptionsalgorithmus' aktualisiert. Das Eingangssignal, auf das dieser Algorithmus angewendet wird, ist ein Fehler-Signal ("Error"-Signal) e(k), welches sich aus der Differenz des Signals d(k) und dem Kompensationssignal y(k) ergibt.

Durch die laufende Adaptien der Koeffizienten w1 und w2 ist es möglich, dass die Frequenz des Referenzsignals x(k) kurzzeitig oder dauernd leicht von der Drehfrequenz des Rotors abweicht, was heisst, dass die beiden Signale s(k) und x(k) asynchron sind und sich die Phasenlage zwischen beiden Signalen laufend ändern kann. Fall der Adaptionsalgorithmus genügend schnell ist, kann diese Änderung der gegenseitigen Phasenlage laufend durch eine Änderung der Koeffizienten w1 und w2 ausgeglichen werden.

Der Adaptionsalgorithmus ist vorzugsweise ein Adaptionsalgorithmus, der entweder nach der Methode der kleinsten mittleren Abweichungsquadrate (LMS-Algorithmus = Least Mean Square - Algorithmus) arbeiten kann oder nach der Methode des steilsten Abweichungsgradienten ("Method of Steepest Descent"). Diese Algorithmen sind beispielsweise in dem Vorlesungsskript von G. Moschytz über adaptive Filter und Neuronale Netze, Teil 1, der ETH Zürich, 1995 beschrieben. Diese Algorithmen kann man nun einsetzen, um aufgrund des Fehler-Signals e(k) die Koeffizienten w1 und w2 des digitalen FIR-Filters 50 zu aktualisieren. Geht man in dieser Art und Weise vor, so ist es nicht nötig, den aktuellen Rotordrehwinkel zu kennen, sondern nur noch dessen Drehzahl. Dennoch ist das von dem FIR-Filter 50 erzeugte Kompensationssignal y(k) eine sehr gute Näherung für das zu kompensierende Signal s(k).

Das Referenzsignal x(k), welches repräsentativ für die Drehfrequenz (Drehzahl) des Rotors 1 ist, kann auf verschiedene Art und Weise gewonnen werden. Eine Möglichkeit besteht zum Beispiel darin, dass das Referenzsignal mit Hilfe der Frequenz von Schwingungen erzeugt wird, die der Rotor im Magnetlager verursacht und die vom Magnetlager auf das Gehäuse (nicht dargestellt) übertragen werden, in welchem das Magnetlager angeordnet ist. Diese Schwingungen können mit Hilfe von Sensoren gemessen werden, so z.B. mit Hilfe eines innnerhalb des Gehäuses angeordneten Mikrofons.

Alternativ kann das Referenzsignal auch mit Hilfe der Motordrehzahl bzw. mit Hilfe der Motorsolldrehzahl digital erzeugt werden. Da bei derartigen Vorrichtungen sehr häufig Mikroprozessoren zur Steuerung verwendet werden, insbesondere auch zur Steuerung des Antriebs des Rotors, ist die Motordrehzahl (falls deren Wert jeweils aktuell bestimmt wird) oder die Motorsolldrehzahl (diese wird vom Mikroprozessor vorgegeben) als Kenngrösse dem Mikroprozessor schon bekannt. Mit Hilfe der Motordrehzahl oder der Motorsolldrehzahl wird dann das Referenzsignal auf digitalem Wege erzeugt, welches ja möglichst die gleiche Drehfrequenz (Drehzahl) aufweisen soll wie der Rotor.

Alternativ kann das Referenzsignal auch mit Hilfe von Kommutierungsssignalen erzeugt werden, wie sie z.B. bei bürstenlosen Gleichstrommotoren (bürstenlose DC-Motoren, die eigentlich AC-Motoren sind), vorkommen.

Schliesslich kann das Referenzsignal auch mit Hilfe der Motorspannung oder des Motorstroms (sofern die aktuellen Werte hierfür bestimmt werden) bzw. mit Hilfe der Motorsollspannung oder des Motorsollstroms (dies können Vorgabegrössen z.B. eines Mikroprozessors sein) erzeugt werden. Diese Spannungen bzw. Ströme sind immer auch repräsentativ für die jeweilige Drehfrequenz (Drehzahl) des Rotors bzw. für die jeweilige Solldrehzahl des Rotors.

## Patentansprüche

1. Verfahren zur Regelung der Position eines magnetisch gelagerten Rotors (1) beim Auftreten periodischer Lageabweichungen, die beispielsweise durch Unwuchten (m) des Rotors (1) verursacht werden, bei welchem Verfahren ein Kompensationssignal (y(k))erzeugt wird, welches in seiner Amplitude und Phase näherungsweise dem Signal (s(k)) entspricht, das durch die periodischen Lageabweichungen des Rotors (1) hervorgerufen wird, und welches der Ansteuereinheit (3) des Magnetlagers (4) des Rotors (1) subtraktiv zum Positionssignal des Rotors frequenz- und phasenrichtig zugeführt wird, dadurch gekennzeichnet, dass das Kompensationssignal (y(k)) ohne Kenntnis der Winkellage des Rotors (1) erzeugt wird.

2. Verfahren nach Anspruch 1, dadurch gekennzeichnet, dass zur Erzeugung des Kompensationssignals (y(k)) das Positionssignal (PS) des Rotors (1) einerseits und ein der Drehfrequenz des Rotors (1) entsprechendes Referenzsignal (x(k)) andererseits verwendet werden.

3. Verfahren nach Anspruch 2, dadurch gekennzeichnet, dass ein adaptives Filter (5) verwendet wird, dessen Eingangssignale durch das Positionssignal (PS) des Rotors (1) einerseits und durch ein der Drehfrequenz des Rotors (1) entsprechendes Referenzsignal (x(k)) andererseits gebildet werden.

4. Verfahren nach Anspruch 3, dadurch gekennzeichnet, dass als adaptives Filter (5) ein Filter mit einem digitalen FIR-Filter (50) verwendet wird, dessen Koeffizienten (w1 ,w2) so adaptiert werden, dass das Ausgangssignal (y(k)) des FIR-Filters näherungsweise dem Signal (s(k)) entspricht, das durch die periodischen Lageabweichungen des Rotors (1) hervorgerufen wird.

5. Verfahren nach Anspruch 4, dadurch gekennzeichnet, dass ein digitales FIR-Filter (50) mit zwei Koeffizienten (w1 ,w2) verwendet wird.

6. Verfahren nach einem der Ansprüche 2 bis 5, dadurch gekennzeichnet, dass das Referenzsignal (x(k)) mit Hilfe der Frequenz von Schwingungen erzeugt wird, die durch den Rotor (1) im Magnetlager (4) verursacht und vom Magnetlager (4) auf das Gehäuse übertragen werden.

7. Verfahren nach einem der Ansprüche 2 bis 5, dadurch gekennzeichnet, dass das Referenzsignal (x(k)) mit Hilfe der Motordrehzahl oder der Motorsolldrehzahl digital erzeugt wird.

8. Verfahren nach einem der Ansprüche 2 bis 5, dadurch gekennzeichnet, dass das Referenzsignal (x(k)) mit Hilfe von Kommutierungssignalen erzeugt wird.

9. Verfahren nach einem der Ansprüche 2 bis 5, dadurch gekennzeichnet, dass das Referenzsignal (x(k)) mit Hilfe der Motorspannung oder des Motorstroms oder mit Hilfe der Motorsollspannung oder der Motorsollstroms erzeugt wird.

10. Vorrichtung mit einem magnetisch gelagerten Rotor (1), dessen Position mit Hilfe von Positionssensoren (S1,S2,S3,S4) bestimmt wird, und mit einer Ansteuereinheit (3) zur Steuerung der Position des Rotors (1), sowie mit einer Einrichtung (5) zur Erzeugung eines Kompensationssignals (y(k)), mit welcher beim Auftreten periodischer Lageabweichungen, die beispielsweise durch Unwuchten (m) des Rotors (1) verursacht werden, ein Kompensationssignal (y(k)) erzeugt wird, welches in seiner Amplitude und Phase näherungsweise dem Signal (s(k)) entspricht, das durch die periodischen Lageabweichungen des Rotors (1) hervorgerufen wird, und welches der Ansteuereinheit (3) subtraktiv zu dem von den Positionssensoren (S1,S2,S3,S4) kommenden Positionssignal (PS) frequenz- und phasenrichtig zugeführt wird, dadurch gekennzeichnet, dass die Einrichtung (5) zur Erzeugung des Kompensationssignals das Kompensationssignal (y(k)) ohne Kenntnis der Winkellage des Rotors (1) erzeugt.

11. Vorrichtung nach Anspruch 10, dadurch gekennzeichnet, dass die Einrichtung (5) zur Erzeugung des Kompensationssignals als Einggangssignale die von den Positionssensoren kommenden Positionssignale (PS) einerseits aufweist und andererseits ein der Drehfrequenz des Rotors (1) entsprechendes Referenzsignal (x(k)).

12. Vorrichtung nach Anspruch 11, dadurch gekennzeichnet, dass die Einrichtung zur Erzeugung des Kompensationssignals ein adaptives Filter (5) umfasst, das als Eingangssignale das Positionssignal (PS) des Rotors (1) einerseits und das der Drehfrequenz des Rotors entsprechende Referenzsignal (x(k)) andererseits aufweist.

13. Vorrichtung nach Anspruch 12, dadurch gekennzeichnet, dass das adaptive Filter (5) ein digitales FIR-Filter (50) umfasst, dessen Koeffizienten (w1 ,w2) so adaptiert werden, dass das Ausgangssignal (y(k)) des FIR-Filters (50) näherungsweise dem Signal (s(k)) entspricht, das durch die periodischen Lageabweichungen des Rotors (1) hervorgerufen wird.

14. Vorrichtung nach Anspruch 13, dadurch gekennzeichnet, dass das digitale FIR-Filter (50) zwei Koeffizienten (w1,w2) aufweist.

15. Vorrichtung nach einem der Ansprüche 11 bis 14, dadurch gekennzeichnet, dass das Referenzsignal (x(k)) mit Hilfe von Sensoren erzeugt wird, welche die Frequenz der Schwingungen messen, die der Rotor (1) im Magnetlager (4) verursacht und die vom Magnetlager auf das Gehäuse übertragen werden.

16. Vorrichtung nach einem der Ansprüche 11 bis 14, dadurch gekennzeichnet, dass sie einen Mikorprozessor umfasst, welcher das Referenzsignal (x(k)) mit Hilfe der Motordrehzahl oder der Motorsolldrehzahl digital erzeugt.

17. Vorrichtung nach einem der Ansprüche 11 bis 14, dadurch gekennzeichnet, dass sie eine Einrichtung aufweist, welche das Referenzsignal (x(k)) mit Hilfe von Kommutierungssignalen erzeugt.

18. Vorrichtung nach einem der Ansprüche 11 bis 14, dadurch gekennzeichnet, dass das sie eine Einrichtung umfasst, welche das Referenzsignal (x(k)) mit Hilfe der Motorspannung oder des Motorstroms oder mit Hilfe der Motorsollspannung oder der Motorsollstroms erzeugt.
